# EUROPEAN PATENT APPLICATION

(11) **EP 4 607 606 A1**
(43) Date of publication of application: **27.08.2025**
(21) Application number: 22962858.1
(22) Date of filing: 31.10.2022
(51) Int. Cl.: H01M 4/1395, H01M 4/04, H01M 4/66, H01M 4/62, H01M 4/38, H01M 10/052, H01M 4/02

(54) **METHOD FOR PREPARING ANODE MATERIAL FOR LITHIUM METAL BATTERY BY USING GRAPHENE-PRETREATED SUBSTRATE**

(30) Priority: 21.10.2022 KR 20220136737
(71) Applicant: Energy Tech Solution Co., Ltd., Seoul 08378 (KR)
(72) Inventor: KIM, Young Hwan, Incheon 21581 (KR)
(74) Representative: Spengler, Robert
(86) International application number: PCT/KR2022/016784
(87) International publication number: WO 2024/085296

(57) **Abstract**

The method for manufacturing anode materials of a lithium metal battery according to the present invention includes the steps of preparing a current collector substrate foil; pretreating the first surface of the current collector substrate foil by coating graphene thereon using a wet or dry method; pretreating the second surface, which is the opposite side of the current collector substrate foil, by coating graphene thereon using a wet or dry method; forming an anode material by laminating a lithium metal foil onto both sides of the graphene-pretreated substrate using a press roll; and winding the laminated anode material.

## Description

### Technical field

The present invention relates to a method for manufacturing anode materials of a lithium metal battery using a graphene pretreated substrate, and more specifically, a method for manufacturing anode materials of a lithium metal battery that is pretreated with graphene with binding force and conductivity in order to combine a lithium metal foil to an anode substrate.

### Background art

A lithium-ion battery is primarily composed of a cathode (positive electrode), an anode (negative electrode), an electrolyte, and a separator. The cathode serves as the source of lithium ions, which determines the capacity and voltage of the lithium-ion battery. The anode, typically constructed from stable graphite, functions by reversibly absorbing and releasing lithium ions from the cathode, thereby facilitating the flow of current through an external circuit. The electrolyte acts as a medium that enables the movement of lithium ions between the cathode and anode, utilizing materials with high ionic conductivity. The separator serves to physically prevent the cathode and anode from coming into contact with each other, allowing only the passage of ions.

The anode of the lithium-ion battery plays a crucial role in determining the battery's lifespan and capacity. In the early days, lithium metal was directly used, but due to the risk of ignition and explosion, graphite material is used in a layered structure until now, and recently, silicon with an energy density more than 10 times higher than graphite and faster charging and discharging speed has been attracting attention, but silicon material expands more than 3~4 times more volume than graphite, so more research is needed to stabilize it.

The manufacturing process of the lithium-ion battery can be largely categorized into electrode processes, assembly processes, and formation processes, with specific procedures varying depending on the battery type and manufacturer.

The electrode process involves the production of cathode and anode current collectors, utilizing a composite mixture of current collector substrate foils, cathode/anode active materials, conductive agents, and binders. This process consists of mixing, coating, pressing, slitting, and drying with the manufacturing processes for the cathode and anode being conducted separately.

As a next-generation battery, lithium metal batteries utilizing lithium metal as the anode have the potential to increase energy density to over 1,000 Wh/L, surpassing that of lithium-ion batteries, which is 800 Wh/L. So, research and development efforts are being focused on this technology.

Lithium metal is inherently soft and sticky, which leads to issues such as adhesion between pieces and adhering to foreign substances, making it difficult to produce lithium foils with a thickness of less than 100 µm. These properties of the lithium metal result in the occurrence of sticking phenomena during punching or notching processes using molds, leading to defects and reduced productivity. Furthermore, when the lithium metal is stored in a magazine after notching, the pressure from the weight of the anode itself causes the pieces to stick together. To address these issues, loading lithium in small amounts to prevent sticking can lead to frequent magazine replacements, which in turn decreases productivity.

Therefore, in order to use metallic lithium as anode materials, it is essential to prevent the lithium foil from sticking to rollers during the pressing process, to implement a special manufacturing process that avoids contamination of the molds during the notching process, and the magazine storage process should be omitted.

In the electrode process, the lithium metal anode material is combined with the copper foil current collector by pressing lithium foil as an active material onto both sides of the copper foil. However, using steel rolls with strong hardness on both sides of the press during the press process can lead to poor lamination, resulting in issues such as sticking to the rolls or tearing.

Additionally, there is a problem of weak adhesion between the substrate and the lithium foil, which can lead to delamination. Furthermore, there is an issue of increased resistance at the interface between the substrate and the lithium foil.

### Detailed description of the invention

### Technical challenge

In order to solve the above problem, the present invention intends to provide a method for manufacturing anode materials of a lithium metal battery by pretreating a substrate with graphene to enhance binding between the substrate and the lithium foil, as well as to improve electrical conductivity.

### Technical solution

A method for manufacturing anode materials of a lithium metal battery according to the present invention, aimed at solving the aforementioned problems, comprises the steps of: preparing a current collector substrate foil; pretreating a first side of the current collector substrate foil by coating graphene using a wet or dry method; pretreating a second side of the current collector substrate foil, which is the reverse side, by coating graphene using the wet or dry method; forming the anode materials by laminating lithium metal foils onto both sides of the graphene pretreated substrate using press rolls; and winding the laminated anode material.

The step of pretreating by coating graphene using the wet method includes the steps: preparing a graphene coating solution; coating the graphene coating solution onto a first side of the current collector substrate foil; performing a primary drying process after coating the graphene coating solution; coating the graphene coating solution onto a second side of the current collector substrate foil; and performing a secondary drying process after coating the graphene coating solution.

The graphene is manufactured by a thermal reduction method.

The graphene coating solution is a mixture of graphene and a solvent.

The step of pretreating by coating graphene using the dry method is directly depositing and coating onto the current collector substrate foil using a chemical vapor deposition (CVD) method.

The step of pretreating by coating graphene using the dry method is directly depositing and coating onto the current collector substrate foil using a plasma CVD method.

The plasma CVD method is manufactured by an in-line roll-to-roll manufacturing apparatus.

As another embodiment of the present invention, the anode materials manufactured by the method are laminating lithium metal foils onto both sides of the graphene pretreated substrate.

As another embodiment, a lithium metal battery using the anode materials.

As another embodiment, the manufacturing apparatus for the method of the anode materials of a lithium metal battery includes a roll unwinding chamber for unwinding the current collector substrate foil; a plasma CVD deposition chamber for depositing graphene onto the current collector substrate foil; and a roll winding chamber for winding the pretreated current collector substrate foil.

The roll unwinding chamber, the plasma CVD deposition chamber, and the roll winding chamber are connected in a vacuum.

### Advantageous Effects

The method for manufacturing anode materials of a lithium metal battery using a graphene pretreated substrate according to the present invention involves pretreating a current collector substrate foil with graphene to enhance the adhesion between a substrate and a lithium layer, as well as to improve electrical conductivity.

An inline roll-to-roll manufacturing apparatus according to the present invention is connected in a vacuum, which increases productivity through inline roll-to-roll processing. It allows for the acquisition of a high-purity, high-quality graphene layer, thereby fully utilizing the adhesive properties and high electrical conductivity of the graphene, ultimately improving the quality of a product.

### Brief description of drawings

Figure 1 is a cross-sectional view of the anode materials of a lithium metal battery using a graphene pretreated substrate according to the present invention.
Figure 2 is an exploded perspective view of the anode materials of a lithium metal battery using a graphene pretreated substrate according to the present invention.
Figure 3 is a flowchart illustrating the manufacturing method of the anode materials of a lithium metal battery using a wet graphene pretreated substrate according to the present invention.
Figure 4 is a schematic diagram illustrating a principle of a micro gravure coating method according to the present invention.
Figure 5 is a schematic diagram of an inline roll-to-roll manufacturing apparatus for a dry graphene pretreated substrate according to the present invention.

### Mode for Invention

The present invention is referred to as a 'lithium metal (Li metal) battery' to distinguish it from conventional 'lithium-ion (Li ion) batteries' that use graphite and other materials as an anode, as it utilizes lithium metal as an anode material.

An active material is a substance that chemically reacts during the discharge of a cell to produce electrical energy. A cathode active material for lithium-ion batteries and lithium metal batteries includes substances capable of providing lithium ions, such as lithium cobalt oxide (LCO), lithium manganese oxide (LMO), and lithium nickel oxide (LNO). Combinations of these materials, harmonizing their respective properties, result in practical applications such as NCM (Nickel Cobalt Manganese) and NCA (Nickel Cobalt Aluminum).

The anode active material serves a function of generating electricity by storing and releasing lithium ions that originate from the cathode. During charging, lithium ions are stored in the anode, and during discharge, these lithium ions are transferred to the cathode through the electrolyte, while the electrons, separated from the lithium ions, travel through the conductive material, generating electricity. The anode active material in lithium-ion batteries typically uses natural graphite, which has been increasingly replaced by synthetic graphite, and recently, silicon has gained attention due to its high energy density and rapid charge-discharge rates.

A conventional manufacturing process for the anode of lithium-ion batteries primarily involves mixing graphite with a conductive agent and a binder to form a slurry, which is then coated onto a current collector substrate foil.

In contrast, the lithium metal battery according to the present invention employs lithium metal itself as the anode active material, which is formed into a foil and laminated onto the current collector substrate foil. The lamination technique of the present invention involves pressing the lithium foils onto both sides of the copper foil current collector, reinforcing the adhesion and electrical conductivity issues that may arise from mechanical bonding by inserting a graphene layer between the copper foil and the lithium foil.

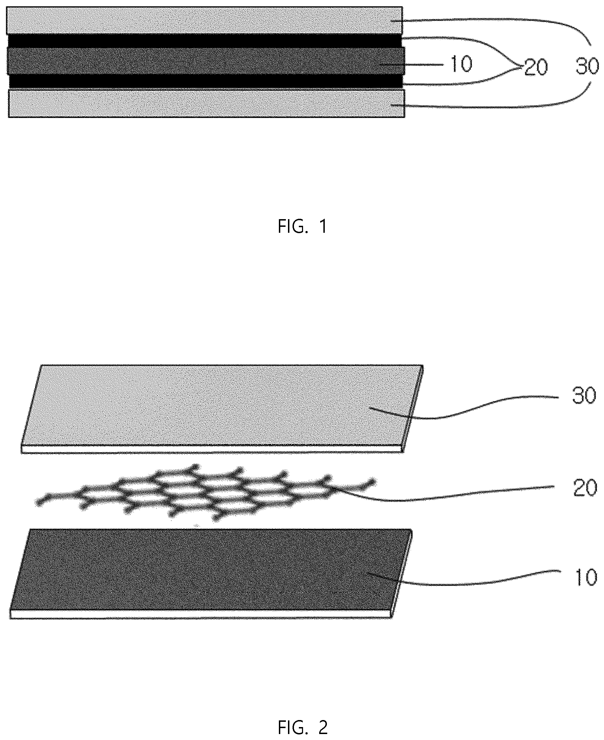

Figure 1 is a cross-sectional view of the anode materials of a lithium metal battery using a graphene pretreated substrate according to the present invention, comprising a current collector substrate foil (10), graphene layers (20) coated on both sides of the current collector substrate foil, and lithium metal foils (30) laminated onto the graphene layers by pressing.

The current collector substrate foil is made of copper foil.

The graphene is a two-dimensional nanomaterial with a single atomic thickness, where carbon atoms are bonded in a honeycomb structure through sp2 hybridized orbitals. Monolayer graphene possesses a large surface area of up to 2,600 m²/g, high electrical conductivity of 6,000 S/cm, high thermal conductivity of 5,000 W/m·K, and excellent mechanical properties with a Young's modulus value reaching 1 TPa.

The graphene can be produced through various methods, including the separation of graphene layers from graphite, chemical synthesis methods, epitaxial growth on SiC, and chemical vapor deposition (CVD). An economical method for producing large quantities of powdered graphene involves oxidizing graphite to produce graphite oxide (GO) and then thermally reducing it.

The functional groups containing oxygen attached to graphite oxide (GO) undergo thermal decomposition at high temperatures in a non-oxidizing atmosphere, resulting in the release of CO₂. The interlayer pressure generated by the released CO₂ causes the thermally reduced GO, or graphene, to delaminate into individual layers. Therefore, when GO is introduced into a high-temperature non-oxidizing atmosphere, thermal reduction occurs, leading to the delamination of the layers and the production of graphene. The thermal reduction method is economical and environmentally friendly as it does not require solvents for GO dispersion. Additionally, the absence of a dispersing medium minimizes the re-aggregation of the produced graphene. The graphene produced by the thermal reduction method (thermally reduced graphene: TRG) typically consists of several stacked graphene layers, with a surface area ranging from 400 to 1,500 m²/g. The graphene produced by this method retains some polar functional groups containing oxygen, such as epoxy and hydroxyl groups, which allows for uniform dispersion in polar polymers and solvents without the need for additional modification.

There are two methods for forming graphene layers (20): wet methods and dry methods. The wet methods include gravure coating, comma coating, slot-die coating, and spray coating, with the present invention utilizing the micro gravure coating method.

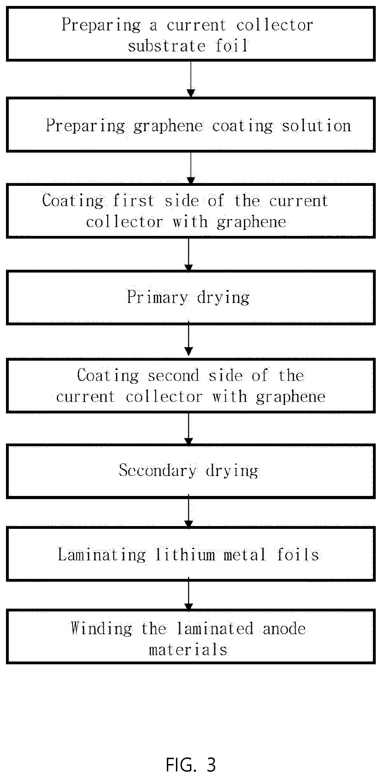

Figure 3 illustrates a flowchart for the manufacturing method of anode materials of a lithium metal battery using a wet graphene pretreated substrate according to the present invention. The process includes the steps of preparing a current collector substrate foil, preparing a graphene coating solution, coating the graphene coating solution onto the first side of the current collector substrate foil, performing a primary drying step after coating, coating the graphene coating solution onto the second side of the current collector substrate foil, performing a secondary drying step after coating, and finally, pressing lithium metal foil onto both sides of the graphene pretreated substrate foil to form the anode materials, followed by winding the assembled anode materials.

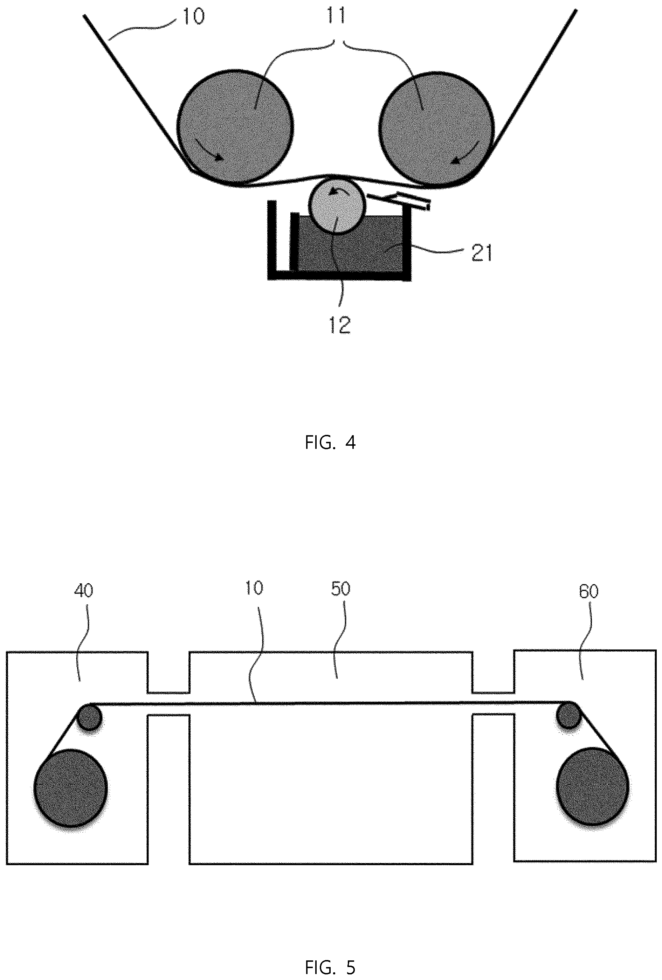

Figure 4 is a schematic diagram illustrating the principle of the micro gravure coating method according to the present invention, also known as the reverse roll kiss coating method. To minimize the contact angle between the current collector substrate foil (10) and a micro gravure roll (12), the radius of the micro gravure roll is reduced, thereby minimizing the contact area between the roll surface and the current collector substrate foil. This allows for the uniform and precise application of the graphene coating solution (21) for the current collector substrate foil.

The graphene coating solution (21) is prepared by dispersing graphene in a solvent. A stable graphene dispersion can be produced using non-covalent dispersants. The dispersion can be improved in terms of dispersion stability through ultrasonic treatment. Dispersants such as NMP (N-methyl pyrrolidone), Tween series, Span series, and Pluronic series can form a stable graphene dispersion. Additionally, solvents such as ethanol and THF (tetrahydrofuran) may also be used.

To enhance the adhesion between the graphene coating solution and the current collector substrate foil, a binder may be added. Suitable binders include PVC (polyvinyl chloride) and PVDF (polyvinylidene difluoride).

The graphene coating solution is applied to the first side surface of the current collector substrate foil using a gravure coating method, followed by drying. The same method is then used to coat and dry the second side surface of the current collector substrate foil, which is the opposite side. Subsequently, lithium metal foils (30) are laminated onto both sides.

The graphene coating can be formed at predetermined intervals to create a specific pattern.

Dry methods for forming the graphene layer include direct deposition onto the current collector substrate foil using techniques such as chemical vapor deposition (CVD) and plasma CVD.

The CVD method allows for the production of monolayer to few-layer graphene with excellent crystallinity over a large area. This method involves adsorbing and decomposing (or reacting) a gaseous or vapor-phase carbon precursor with high kinetic energy onto the surface of the current collector substrate foil where graphene is to be grown. This process breaks down carbon atoms, which then bond together to form graphene.

Figure 5 is a schematic diagram of an in-line roll-to-roll manufacturing apparatus for dry graphene pretreated substrates according to the present invention, comprising a roll unwinding chamber (40), a CVD chamber (50), and a roll winding chamber (60), all connected in vacuum to form an in-line configuration.

The CVD method involves injecting CH₄ gas and H₂ gas into a chamber and reacting them thermally or via plasma to directly deposit onto the substrate. Compared to wet coating methods, this approach simplifies the process by eliminating dispersion, coating, drying, and addition of binding agent, thereby allowing for the production of high-quality graphene layers.

The thermal CVD method requires heating the substrate with a heater; however, a more convenient plasma CVD can be employed to conduct the process at lower temperatures.

The in-line roll-to-roll manufacturing apparatus is connected in vacuum, enhancing productivity through in-line roll-to-roll processing. This setup enables the production of high-purity, high-quality graphene layers, fully utilizing the adhesion properties and high electrical conductivity of graphene, thereby improving overall quality.

### Industrial availability

The method for manufacturing anode materials of a lithium metal battery using a graphene pretreated substrate according to the present invention involves pretreating the substrate with graphene to enhance the adhesion between the substrate and the lithium layer, as well as to improve electrical conductivity, thereby enabling the production of lithium metal anode materials.

## Claims

1. A method for manufacturing anode materials of a lithium metal battery comprises the steps of:
preparing a current collector substrate foil;
pretreating a first side of the current collector substrate foil by coating graphene using a wet or dry method;
pretreating a second side of the current collector substrate foil, which is the reverse side, by coating graphene using the wet or dry method;
forming the anode materials by laminating lithium metal foils onto both sides of the graphene pretreated substrate using press rolls; and
winding the laminated anode materials.

2. The method as claimed in claim 1, wherein the step of pretreating by coating graphene using the wet method includes the steps:
preparing a graphene coating solution;
coating the graphene coating solution onto a first side of the current collector substrate foil;
performing a primary drying process after coating the graphene coating solution;
coating the graphene coating solution onto a second side of the current collector substrate foil; and
performing a secondary drying process after coating the graphene coating solution.

3. The method as claimed in claim 1, wherein the graphene is manufactured by a thermal reduction method.

4. The method as claimed in claim 1, wherein the graphene coating solution is a mixture of graphene and a solvent.

5. The method as claimed in claim 1, wherein the step of pretreating by coating graphene using the dry method is directly depositing and coating onto the current collector substrate foil using a chemical vapor deposition (CVD) method.

6. The method as claimed in claim 1, wherein the step of pretreating by coating graphene using the dry method is directly depositing and coating onto the current collector substrate foil using a plasma CVD method.

7. The method as claimed in claim 6, wherein the plasma CVD method is manufactured by an in-line roll-to-roll manufacturing apparatus.

8. The anode materials manufactured by the method as claimed in claim 1 are laminating lithium metal foils onto both sides of the graphene pretreated substrate.

9. A lithium metal battery using the anode materials as claimed in claim 8.

10. A manufacturing apparatus for the method as claimed in claim 1 includes:
a roll unwinding chamber for unwinding the current collector substrate foil;
a plasma CVD deposition chamber for depositing graphene onto the current collector substrate foil; and
a roll winding chamber for winding the graphene pretreated current collector substrate foil.

11. The manufacturing apparatus as claimed in claim 9, wherein the roll unwinding chamber, the plasma CVD deposition chamber, and the roll winding chamber are connected in a vacuum.
